(19) Europäisches Patentamt
European Patent Office
Office européen des brevets

(11) **EP 0 712 767 B1**

(12) **EUROPÄISCHE PATENTSCHRIFT**

(45) Veröffentlichungstag und Bekanntmachung des Hinweises auf die Patenterteilung:
**07.07.1999 Patentblatt 1999/27**

(51) Int. Cl.$^6$: **B60R 21/26**, C06D 5/06

(21) Anmeldenummer: **95119145.1**

(22) Anmeldetag: **21.09.1993**

(54) **Gasgenerator für einen Airbag**

Gas generator for an air bag

Générateur de gaz pour un coussin gonflable

(84) Benannte Vertragsstaaten:
**DE FR GB IT**

(30) Priorität: **21.09.1992 DE 4231521**
**02.04.1993 DE 4310853**

(43) Veröffentlichungstag der Anmeldung:
**22.05.1996 Patentblatt 1996/21**

(62) Dokumentnummer(n) der früheren Anmeldung(en) nach Art. 76 EPÜ:
**93920783.3 / 0 660 813**

(73) Patentinhaber:
**HONDA GIKEN KOGYO KABUSHIKI KAISHA**
**Minato-ku Tokyo 107 (JP)**

(72) Erfinder:
• **Schleicher, Ulrich**
**D-91217 Hersbruck (DE)**

• **Klöber, Martin**
**D-91180 Heideck (DE)**
• **Schwarz, Wolfgang**
**D-90480 Nürnberg (DE)**
• **Feuerstake, Eugen**
**D-91058 Erlangen (DE)**

(74) Vertreter:
**Weiss, Wolfgang, Dipl.-Chem. Dr. et al**
**Patentanwälte**
**Weickmann & Partner,**
**Kopernikusstrasse 9**
**81679 München (DE)**

(56) Entgegenhaltungen:
EP-A- 0 069 441          EP-A- 0 474 115
EP-A- 0 496 267          DE-A- 3 824 162
DE-A- 3 909 841          DE-A- 4 005 768
DE-C- 3 935 869          FR-A- 2 673 119
US-A- 4 243 443          US-A- 4 734 141
US-A- 4 796 912          US-A- 5 125 684

**Beschreibung**

Die Erfindung einen Gasgenerator für einen Airbag, der eine pyrotechnische Mischung als Treibladung enthält.

Aus der DE-A-39 20 401 ist ein Gasgenerator für einen Airbag bekannt, bei dem um einen zylindrischen, mit gasfreisetzenden Substanzen gefüllten Druckbehälter eine Kammer angebracht ist. Diese Kammer umgibt ein Filter. Dieser Filter wird von dem Gas durch fußseitig angeordnete Öffnungen angeströmt. Das Gas durchströmt dann den Filter in seiner Längsrichtung und gelangt durch kopfseitig an der Kammer angeordnete Öffnungen in den Airbag. Ein derartiger Gasgenerator benötigt aufgrund seines Druckbehälters genügend dicke Wandstärken. Außerdem ist eine separate Kammer zur Aufnahme des Filters erforderlich. Dadurch ist der Gasgenerator kostenaufwendig. Große Strömungsverluste aufgrund des Filters führen zu kleineren Massenströmen, d.h. die Zeit, die ab der Initiierung der gasfreisetzenden Substanzen verstreicht, bis das Gas den Airbag gefüllt hat, ist groß. Der Treibsatz ist in Form von Tabletten.

Weitere Gasgeneratoren für Airbags sind z.B. in den US-Patenten 3,907,330, 5,087,070 und 5,149,129 beschrieben. Auch in solchen Gasgeneratoren wird das Treibmittel üblicherweise in Form von Pellets, Tabletten oder zylindrischen Formkörpern verwendet. Zum Aufbrechen dieser Formkörper ist eine relativ große Energiemenge erforderlich. Weitere Energieverluste sind durch den langen Weg der Gase in den Gasgenerator bedingt. Durch die Erfindung ist es allerdings möglich, die Gasgeneratoren gegenüber dem Stand der Technik erheblich zu vereinfachen und/oder zu verkleinern. Im allgemeinen weist ein Gasgenerator zur Verwendung einer granulierten pyrotechnischen Mischung einen Behälter mit mehreren Ausströmöffnungen auf, wobei in dem Behälter die pyrotechnische Mischung und mindestens ein Anzündelement für die pyrotechnische Mischung angeordnet sind.

Gegenstand der vorliegenden Erfindung ist somit ein Gasgenerator, insbesondere für einen Airbag, der als Treibladung pyrotechnische Mischung in granulatform enthält. Durch den hohen Wirkungsgrad bzw. die Effektivität dieses pyrotechnischen Mischung enthält der Gasgenerator vorzugsweise die pyrotechnische Mischung in einer Menge von 0,05 bis 0,7 g/l, besonders bevorzugt von 0,08 bis 0,45 g/l und am meisten bevorzugt von 0,1 bis 0,3 g/l des vom

Generator während eines Aufblasens des Airbags durch die gezündete Treibladung zu erzeugenden Gasvolumens. Gasgeneratoren für Airbags gemäß dem Stand der Technik enthalten im Gegensatz dazu die Treibladung in einer Menge von weit über 1 g/l des vom Generator während des Aufblasens zu erzeugenden Gasvolumens. Die Mischung kann hingegen überraschenderweise in erheblich geringerer Menge verwendet werden, gute Ergebnisse wurden beispielsweise durch Verwendung von 4,5 g der Mischung in einem 12 l-Airbag bzw. 12 g der Mischung in einem 60 l-Airbag erzielt, wobei unter diesem Gasvolumen das Volumen bei Normaldruck der durch den Abbrand der Treibladung entstehenden Gase zu verstehen ist. (Bezüglich dieser Werte für das Airbagvolumen ist anzumerken, daß sie normalerweise geringer als die Werte des wie oben angegeben bestimmten Volumens der Reaktionsgase sind, z.B. kann zum Aufblasen eines 60 l-Airbags ein Gasvolumen von 80 - 140 l erforderlich sein). Die Mischung kann natürlich nicht nur für Airbags in dieser Größe, sondern auch für größere Airbags mit einem Volumen von z.B. mehr als 100 l verwendet werden.

Die Messung dieses Gasvolumens erfolgt in einem geschlossenen Tank, insbesondere einem Tank mit einem Volumen $V_0$ (z.B. 60 l), in dem sich z.B. 10 - 20 g Treibladung innerhalb des Hochdruckbehälters befinden. Das Innenvolumen des Tanks ist vor der Zündung der Treibladung bei einem Umgebungsdruck $P_0$ von ca. 1 atm. Nach Zündung der Treibladung wird ein Druckanstieg im Tank auf einen Wert $P_{max}$ beobachtet. Aus diesem Druckanstieg ($P_{max} - P_0$) läßt sich dann das Volumen $V_1$ der Reaktionsgase bei Umgebungsdruck (ca. 1 atm) bestimmen:

$$V_1 = \frac{P_{max}}{P_0} \cdot V_0$$

Der Gasgenerator mit der granulierten, pyrotechnischen Mischung enthält vorzugsweise einen Behälter mit mehreren Ausströmöffnungen, in dem sich die pyrotechnische Mischung und mindestens ein Anzündelement befinden. Anzündelemente sind aus dem Stand der Technik bekannt, Beispiele hierfür sind etwa Mischungen aus Bor und Kaliumnitrat. Das Anzündelement ist vorzugsweise nicht mit der Treibladung vermischt, sondern ist separat davon angeordnet. Weiterhin ist hinsichtlich der Anzündelemente für die erfindungsgemäße pyrotechnische Mischung zu beachten, daß sie aufgrund des hohen Wirkungsgrads der erfindungsgemäßen Mischung im Vergleich zum Stand der Technik schwächer sein können. Weiterhin sollte die Anordnung des Anzündelements bzw. der Anzündelemente im Behälter vorzugsweise derart sein, daß bei der Zündung das Granulat nicht in eine Ecke gepreßt wird. Das Anzündelement bzw. die Anzündelemente sollten stattdessen derart angeordnet sein, daß eine möglichst gleichförmige Zündung der pyrotechnischen Mischung ermöglicht wird. Bei einem zylinderförmigen Behälter kann dies beispielsweise dadurch erreicht werden, daß das Anzündelement bzw. die Anzündelemente in Form kleinerer Hohlzylinder sind, die innerhalb des Behälters angeordnet sind. Die Zündung des Anzündelements kann auf bekannte Weise, z.B. mechanisch durch Schockwellen oder elektrisch erfolgen.

Der Behälter für den erfindungsgemäßen Gasgenerator kann beispielsweise im wesentlichen zylinderförmig mit einer Vielzahl von umfangseitigen Öffnungen, z.B. in Form von Kanälen, ausgebildet sein. Der Behälter kann jedoch natürlich auch andere Formen aufweisen, z.B. eine toroidale Form, wie etwa in Airbags des Standes der Technik. Weiterhin ist der Behälter insbesondere für Airbaganwendungen so ausgestaltet, daß er dem in seinem Inneren beim Aufblasen des Airbags durch Zündung der Treibladung entstehenden Druck widerstehen kann. Ein weiterer Vorteil der erfindungsgemäßen pyrotechnischen Mischung besteht darin, daß dieser Druck aufgrund des hohen Wirkungsgrads der Mischung wesentlich geringer als bei bekannten Gasgeneratoren des Standes der Technik ist. Der Behälter sollte so ausgestaltet sein, daß er einen Druck von mehr als 20 bar, vorzugsweise 20 bis 100 bar und besonders bevorzugt 50 bis 60 bar widerstehen kann. Bei Airbag-Gasgeneratoren des Standes der Technik werden im allgemeinen erheblich größere Drucke von bis zu 600 bar erzeugt.

Der bei Verwendung der pyrotechnischen Mischung im Behälter des Gasgenerators entstehende geringe Druck führt dazu, daß der Behälter nur eine relativ dünne Wandstärke aufweisen muß, wodurch die Herstellung des Behälters einfacher und billiger wird. So haben sich beispielsweise Behälter als geeignet erwiesen, die eine Umfangswand mit einer Wandstärke von 0,5 bis 10 mm aufweisen und wobei der Werkstoff des Behälters aus Metall, insbesondere Aluminium oder korrosionsbeständigem Stahl, besonders bevorzugt Aluminium, oder aus Keramik- oder Glasmaterialien, insbesondere Silikat, besteht. Je nach Ausführungsform des Behälters sind insbesondere Wandstärken im Bereich von 0,5 - 2 mm bei Verwendung von Separatoren wie im folgenden erklärt oder im Bereich von 4 - 10 mm ohne Separatoren bevorzugt. Die Herstellung von Aluminiumbehältern mit den oben genannten Wandstärken ist auf technisch einfache Weise möglich, z.B. durch Tiefziehen. Separatoren im Sinne dieser Erfindung sind insbesondere als Filter bzw. Siebe aufzufassen.

Die pyrotechnische Mischung liegt im Behälter vorzugsweise in einer locker geschütteten Form vor, d.h. die Beladungsdichte der pyrotechnischen Mischung sollte nicht größer als die oben angegebene bevorzugte Schüttdichte sein. Weiterhin sollte die pyrotechnische Mischung im Behälter durch ein Aodichtungselement, insbesondere eine Kunststoff- oder Metallfolie, vor einem Kontakt mit der Atmosphäre geschützt sein. Dieses Aodichtungselement kann sowohl innerhalb als auch außerhalb des Behälters vorgesehen sein. Das Abdichtungselement kann auch durch den Behälter selbst gebildet werden, wenn dieser als geschlossene Form mit "Sollöffnungsstellen" ausgebildet ist, die erst bei Zündung der Treibladung geöffnet werden und einen Kontakt mit der Atmosphäre schaffen.

Die Öffnungen oder "Sollöffnungsstellen" im Behälter können vielfältig ausgestaltet sein, wobei jedoch kreisförmige Öffnungen bevorzugt sind. Die Anzahl und der Durchmesser dieser Öffnungen kann abhängig von der Konstruktion des jeweiligen Behälters variieren. Für einen zylindrischen Behälter mit einem Innenvolumen von 10 cm$^3$, der mit 4,5 g der erfindungsgemäßen pyrotechnischen Mischung beladen wird und zum Aufblasen eines 12 l-Airbags diente hat sich beispielsweise eine Zahl von 28 Löchern mit einem Durchmesser von jeweils 2,5 mm in der Umfangswand des Behälters als geeignet erwiesen. Der Durchmesser dieser Löcher kann vorzugsweise von 1 mm bis 5 mm, besonders bevorzugt von 2 mm bis 3 mm variieren.

Für eine reproduzierbare Verbrennung der Treibladung ist es bevorzugt, wenn während des Aufblasens des Airbags im Innenraum des Behälters ein um mehr als den Faktor 2 höherer Druck als außerhalb des Behälters herrscht. Auf diese Weise können die bei der Verbrennung entstehenden Gase mit Schallgeschwindigkeit durch die Öffnungen des Behälters strömen, so daß eine Entkopplung der Verbrennung im Innenraum des Behälters von den Vorgängen außerhalb des Behälters erreicht wird. Unter dem Begriff "während des Aufblasens" ist in diesem Zusammenhang zu verstehen, daß die Druckdifferenz zwischen dem Behälter und außerhalb nicht bereits während der Zündung des Anzündelements herrschen muß, daß sie aber vorzugsweise während des gesamten Abbrennens der Treibladung vorhanden ist.

Der Behälter des Gasgenerators ist in der vorliegenden Erfindung mindestens im Bereich der Öffnungen von einem Raumbereich umgeben, der durch einen gasdurchlässigen Separator vom eigentlichen Airbagvolumen, d.h. vom Volumen zwischen Separator und Airbaghülle, abgegrenzt ist. Dieser Raumbereich kann auch auf solche Weise ausgestaltet sein, daß während des Aufblasens des Airbags durch die gezündete Treibladung in diesem Raumbereich ein höherer Druck als im Airbagvolumen herrscht. Eine andere Funktion des Separators besteht darin, als Rückhalteelement für feste Teilchen zu dienen, die bei der Verbrennung der pyrotechnischen Mischung aus dem Behälter geschleudert werden. Dabei ist anzumerken, daß der Separator vorzugsweise so ausgestaltet ist, daß er keine oder nur eine unwesentliche druckreduzierende Wirkung ausübt. Die Hauptaufgaben liegen jedoch darin, die ausströmenden Partikel zurückzuhalten und zu verbrennen sowie die gebündelten heißen Gasstrahlen aufzuweiten. Die aufgeweiteten Gasstrahlen stellen für das Gewebe des Airbags keine Gefahr dar. Somit kann der gefaltete Airbag dicht am Gasgenerator gelagert sein.

Ein im Sinne der Erfindung günstiger Raumbereich kann beispielsweise auch dadurch entstehen, daß man einen Behälter mit einer größeren Wandstärke von vorzugsweise 4 - 10 mm verwendet, in dem die Öffnungen als Kanäle, z.B. als Bohrungen oder Düsen, ausgebildet sind. Die Kanäle können gerade oder auch gekrümmt durch die Behälterwand verlaufen.

Bei Vorhandensein eines Separators ist der Raumbereich vorzugsweise durch die Umfangswand des Behälters und den Separator begrenzt, wobei der Separator für feste, bei der Zündung der Treibladung entstehende und aus dem Behälter austretende Teilchen mit einem Durchmesser von mindestens 0,3 mm, besonders bevorzugt von mindestens 0,1 mm undurchlässig ist. Der Separator kann aus einer oder mehreren Schichten aufgebaut sein. Beispielsweise kann der Separator mindestens ein inneres Separatorelement und mindestens ein äußeres Separatorelement umfassen, wobei in einer besonders bevorzugten Ausführungsform als Separatorelemente mindestens ein inneres Metallnetz mit einer groben Maschenweise und ein äußeres Metallnetz mit einer feineren Maschenweite vorgesehen sind. Die Metallnetze können z.B. aus korrosionsbeständigem Stahl gefertigt sein. Die lichte Maschenweite des groben Metallnetzes beträgt vorzugsweise 0,4 bis 1 mm, besonders bevorzugt 0,5 bis 0,8 mm, und die lichte Maschenweite des äußeren Metallnetzes beträgt vorzugsweise 0,1 bis 0,3 mm, besonders bevorzugt 0,1 bis 0,25 mm. Die Drahtstärke des inneren Metallnetzes beträgt vorzugsweise 0,05 bis 0,5 mm und die des äußeren Metallnetzes von 0,05 bis 0,3 mm. Die Höhe der Metallnetze entspricht im allgemeinen der doppelten Drahtstärke. Zwischen dem inneren Metallnetz und dem äußeren Metallnetz kann gegebenenfalls ein Abstandselement vorgesehen sein. Weiterhin kann beispielsweise noch ein Filterelement aus wärmebeständigem Material, z.B. Steinwolle, zwischen den einzelnen Separatorelementen angeordnet sein. Weiterhin kann der Aufbau des Separators auch so sein, daß außerhalb des feinen Metallnetzes noch ein weiteres gröberes Metallnetz vorgesehen ist, das zur mechanischen Stabilisierung des feinen Metallnetzes dient.

Der Separator sollte im allgemeinen nicht direkt im Bereich der Öffnung an der Umfangswand des Behälters anliegen, er wird vorzugsweise durch Abstandselemente in einer vorbestimmten Entfernung von der Umfangswand des Behälters gehalten. Diese Abstandselemente können beispielsweise als eine um den Behälter gelegte Spiralfeder oder als auf der Außenwand des Behälters befindliche Vorsprünge ausgebildet sein. Andererseits kann der Separator auch mit Hilfe von Fixierringen in dem gewünschten Abstand vom Behälter gehalten werden. Der Abstand des Separators vom Behälter ist vorzugsweise derart, daß ein Ausströmen des bei der Verbrennung der Treibladung entstehenden Gases durch die Öffnungen des Behälters mit Schallgeschwindigkeit gewährleistet ist. Es haben sich in der Praxis Abstände von 2 bis 8 mm, vorzugsweise von 3 bis 6 mm und besonders bevorzugt von 3,5 bis 5 mm als geeignet erwiesen.

Weiterhin können zusätzliche Abstandselemente aus wärmedämmendem Werkstoff, z.B. Keramikmaterialien, vorgesehen sein, um die Airbaghülle währnd des Aufblasens vor einem Kontakt mit dem Behälter und dem Separator, sofern dieser vorhanden ist, zu schützen. Auf diese Weise wird die Gefahr des Reißens der Airbaghülle durch übermäßige Erhitzung vermieden werden.

Dementsprechend betrifft die vorliegende Erfindung einen Gasgenerator für Airbags, umfassend:

- einen Behälter mit mehreren Ausströmöffnungen, in dem sich eine gaserzeugende Treibladung befindet, die in Form von Granulatteilchen mit einer Korngröße von 500 µm - 4 mm ist,
- mindestens ein Anzündelement zur Anzündung der Treibladung, und
- einen Raumbereich, der den Behälter mindestens im Bereich der Öffnungen umgibt und der (a) durch einen gasdurchlässigen Separator vom Airbagvolumen abgegrenzt ist, oder (b) auf eine solche Weise ausgestaltet ist, daß mindestens während eines Teilabschnitts des Aufblasens des Airbags durch die gezündete Treibladung in diesem Raumbereich ein höherer Druck als im Airbagvolumen herrscht, oder (c) durch einen gasdurchlässigen Separator abgegrenzt und auf eine solche Weise ausgestaltet ist, daß während des Aufblasens in ihm ein höherer Druck als im Airbagvolumen herrscht.

Durch die Granulatform der Mischung kann die Treibladung in einer gegenüber dem Stand der Technik erheblich verringerten Menge von vorzugsweise 0,05 bis 0,7 g/l des vom Gasgenerator während eines Aufblasens des Airbags duch die gezündete Treibladung zu erzeugenden Gasvolumens vorhanden sein. Dieser Gasgenerator kann weiterhin eines oder mehrere der oben als bevorzugt beschriebenen technischen Merkmale enthalten.

Schließlich betrifft die Erfindung auch noch eine Airbag-Anordnung, die den oben beschriebenen Gasgeneratoren enthält. So ist es beispielsweise möglich, einen Airbag durch gleichzeitige Zündung mehrerer kleinerer Gasgeneratoren aufzublasen.

Die Erfindung soll weiterhin durch die Figuren 1 bis 5 und die Beispiele beschrieben werden.

Fig. 1 zeigt eine erste Ausführungsform eines erfindungsgemäßen Gasgenerators,

Fig. 2 zeigt eine zweite Ausführungsform eines erfindungsgemäßen Gasgenerators,

Fig. 3 zeigt eine dritte Ausführungsform eines erfindungsgemäßen Gasgenerators,

Fig. 4 zeigt eine erste Ausführungsform eines Separators für einen erfindungsgemäßen Gasgenerator, und

Fig. 5 zeigt eine zweite Ausführungsform des Separators für einen erfindungsgemäßen Gasgenerator.

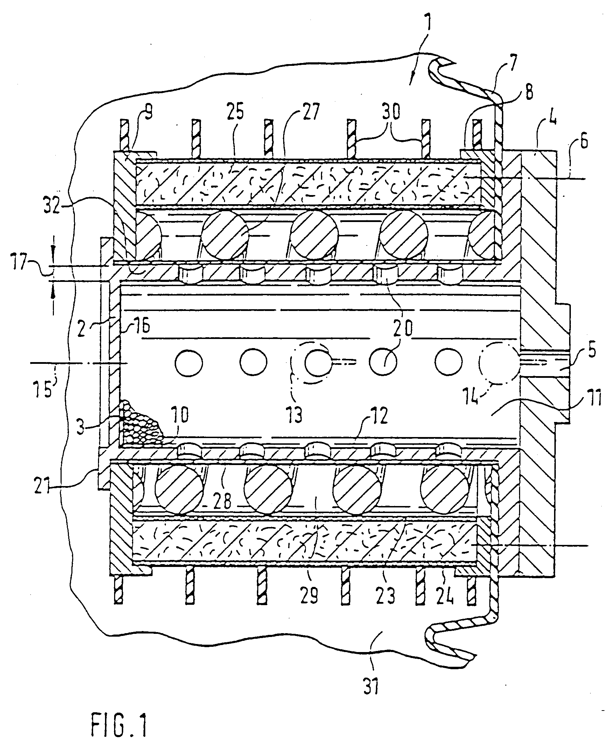

Fig. 1 zeigt eine erste Ausführungsform des erfindungsgemäßen Gasgenerators im Längsschnitt.

Ein Gasgenerator 1 umfaßt einen Behälter 2, der aus Metall (z.B. Aluminium oder korrosionsbeständiger Stahl) gebildet ist, eine granulierte Treibladung 3, einen Verschlußdeckel 4 mit Anzünderöffnung 5, Halteringen 8, 9 für einen Separator 23, 24, 25, der aus Metallnetzen 23, 24 und einem dazwischen befindlichen Filter (25) (z.B. aus Steinwolle) besteht, sowie ein als Schraubenfeder ausgebildetes Abstandselement 27.

Ein aufblasbarer Airbag 7 ist zusammen mit dem Haltering 8 und dem Verschlußdeckel 4 bei 6 verschraubt.

Der Behälter 2 besteht aus dünnwandigem Metallblech, dessen Wanddicke 17 = 1 mm beträgt. Bei einer vollständigen Füllung des Behälters 2 mit 4,5 g der Treibladung 3 können etwa 12 l Gas bei einer Reaktionstemperatur von ca. 1000°C im Innenraum 11 des Behälters erzeugt werden.

Für einen größeren Airbag mit einem Volumen von z.B. 60 l oder 150 l muß die Menge der Treibladung sowie der Generator entsprechend vergrößert werden. Unabhängig davon kann jedoch die Wanddicke 17 von 1 mm gegebenenfalls mit geringen Abweichungen erhalten bleiben.

Ein Bördelrand 21 fixiert die Schraubfeder 27, den Haltering 9, den Separator 23, 24, 25 und einen brennbaren Folienschlauch 28 auf dem Behälter 2.

Der Behälter 2 ist bezüglich der Achse 15 rotationssymmetrisch ausgebildet und daher kostengünstig, z.B. im Tiefziehverfahren herstellbar.

Die Schraubenfeder 27 dient als Abstandselement für den Filter 25 mit den Metallnetzen 23, 24.

Die Öffnungen 20 stellen die Verbindung mit dem Hochdruckraum 11 innerhalb des Behälters 2 und einem Raumbereich 29 zwischen dem Behälter 2 und dem ersten Metallnetz 23 dar. Der Filter 25 weist einen geringen Strömungswiderstand auf. Der Filter 25 filtert zusammen mit den Sieben 23, 24 feste Teilchen der abbrennenden Treibladung 3 aus dem Gasstrom und gewährleistet die Verbrennung der noch nicht verbrannten Partikel. Schließlich kann mit dem Filter 25 und den Metallnetzen 23, 24 die Gastemperatur des in den Gassack 7 strömenden Gases gesteuert werden. Die Siebe 23, 24 stützen weiterhin den Filter 25 mechanisch in dem Gasgenerator 1 ab.

Die Öffnungen 20 sind ein wesentlicher Parameter, um den Druckverlauf bei der Zündung der Treibladung zu steuern und zwar sowohl im Hochdruckraum 11 im Inneren des Behälters 2 sowie im Raumbereich 29 und im Airbagvolumen 31.

Abstandsringe 30, die z.B. aus Keramik angefertigt sein können, haben die Aufgabe, den zusammenfallenden Gassack 7 von möglicherweise heißen Teilen des Gasgenerators fernzuhalten.

Nach dem Anzünden des gaserzeugenden Satzes 3 über ein oder mehrere Anzündelemente 13, 14 reißt der aus Kunststoff bestehende Folienschlauch 28 und gibt die Öffnungen 20 frei. Das Gas entspannt sich dann im Raumbereich 29 zwischen dem inneren Metallnetz 23 und der Umfangswand 32 des Behälters 2, der von der Schraubenfeder 27 definiert ist. Dann durchströmt das Gas den Filter 25, um den Airbag 7 aufzublasen. Nach dem Füllvorgang kann das Gas auf nicht gezeigte Weise aus dem Airbag 7 entweichen. Der Airbag 7 fällt dann in sich zusammen und kann sich an die Abstandsringe 30 anlegen. Diese wärmeisolierenden Abstandsringe 30 verhindern das Durchbrennen des Airbags 7 und somit die Gefährdung von Personen. Es hat sich jedoch gezeigt, daß der Gasgenerator in seinen Außenbereichen nur eine Temperatur von 50 bis 60°C aufweist, so daß die Abstandsringe 30 nicht essentiell sind.

Anstelle des außen am Behälter 2 umfangsseitig anliegenden Folienschlauches 2 kann die Treibladung 3 auch in einer feuchtigkeitsdichten Folie 10 eingefüllt sein. Bei Zündung der Treibladung 3 werden bei einem bestimmten kritischen Gasdruck aus der Folie 10 Löcher entsprechend den Öffnungen 20 herausgestanzt. Das Konfektionieren der Treibladung 3 in der Folie 10 ist einfach, kostengünstig und bezüglich der Treibladungsmenge sehr genau. Dieser Vorgang erfolgt separat. Die Montage der in der Folie 10 abgepackten Treibladung gegebenenfalls zusammen mit einem integrierten Anzündmittel ist einfach und sicher durchzuführen. Die Verwendung separater Anzündelemente 13, 14 ist jedoch bevorzugt. Andererseits kann die Folie 10 auch nur an der Innenwand 12 anliegen, wobei eine Stirnwand 16 und der Verschlußdeckel 4 keine Folie 10 tragen müssen. Generell weist die im Behälter 2 angeordnete Folie 10 gegenüber dem außen angeordneten Folienschlauch 28 den Vorteil auf, daß entsprechend dem Querschnitt der Öffnungen 20 definiert die Folie herausgestanzt wird. Bei dem außen angeordneten Folienschlauch 28 kann sich dieser aufblähen und reißt nicht definiert.

Die Folie 10 kann aus Metall, wie etwa Aluminium oder Edelstahl, oder auch aus Kunststoff bestehen.

Neben oder zusätzlich zu den Anzündelementen 13, 14 kann auch ein Anzündelement außerhalb des Behälters 2, jedoch innerhalb des Verschlußdeckels 4 vorgesehen sein. Der Behälter 2 ist nicht auf die zylindrische Form beschränkt, sondern kann jede geeignete Form aufweisen, z.B. eine toroidale bzw. "Doughnut"-Form.

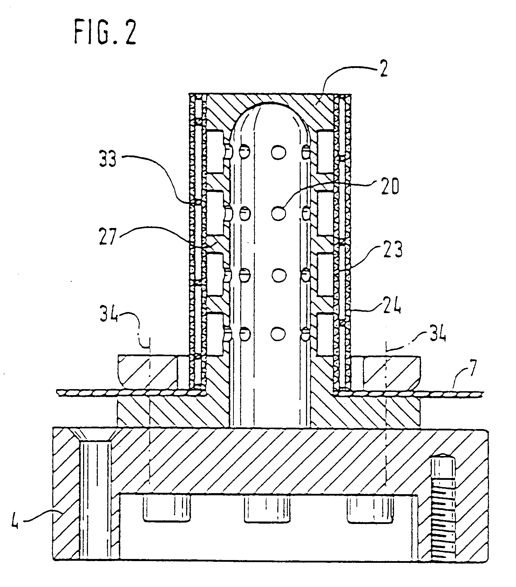

Fig. 2 zeigt eine weitere Ausführungsform eines erfindungsgemäßen Gasgenerators.

Der Gasgenerator für einen Airbag 7 umfaßt einen zylindrischen Behälter 2, der kreisförmige Öffnungen 20 aufweist. Um die Umfangsseite des Behälters 2 ist ein Separator angeordnet, der ein inneres Sieb 23 und ein äußeres Sieb 24 umfaßt. Der Abstand des Separators vom Behälter 2 wird durch Vorsprünge 27 auf der Umfangswand des Behälters 2 definiert. In der gezeigten Ausführungsform beträgt der lichte Abstand zwischen dem inneren Metallnetz 23 und der Umfangswand des Behälters 2 3,75 mm.

Der Abstand zwischen den Sieben 23 und 24 wird durch ein Abstandselement 33, z.B. eine Feder eingestellt.

Der Gasgenerator umfaßt weiterhin einen Dekkel 4, der mit Schrauben 34 an dem Behälter 2 befestigt werden kann.

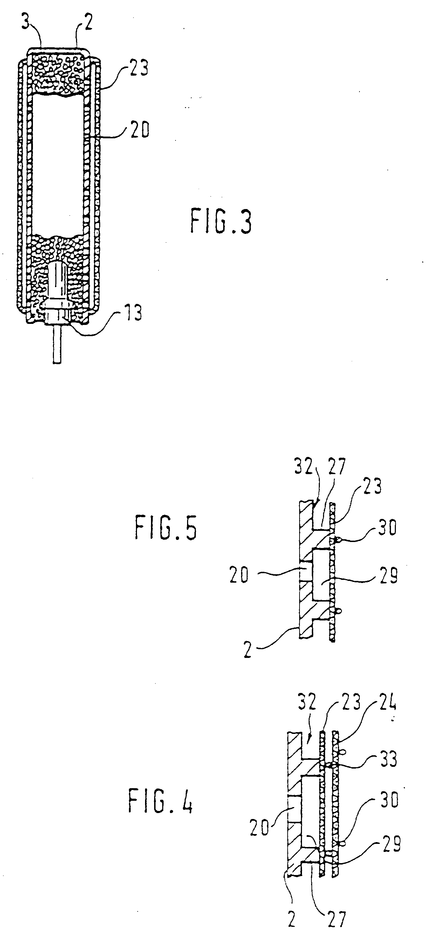

Fig. 3 zeigt eine dritte Ausführungsform des erfindungsgemäßen Gasgenerators. Der Behälter 2 des Gasgenerators enthält eine Treibladung 3 in Form von Granulaten und ein separates Anzündelement 13, das mechanisch oder elektrisch gezündet werden kann. In der Wand des Behälters 2 befinden sich Löcher 20 und in einem Abstand von der Wand des Behälters 2 ist ein Separator 23 angeordnet. Der Airbag sowie die Befestigung des Airbags am Gasgenerator sind nicht gezeigt.

Fig. 4 zeigt eine erste Ausführungsform eines Separatorelements. Es ist ein Ausschnitt des Behälters 2 mit einer Öffnung 20 gezeigt. An der Umfangswand 32 des Behälters 2 befinden sich Vorsprünge 27, die einen Raumbereich 29 zwischen dem Separator 23, 33, 24 und der Umfangswand 32 des Behälters 2 definieren. Der Separator besteht aus einem inneren Metallnetz 23 mit einer Maschenweite von 125 bis 130 μm und einer Drahtstärke von 0,081 mm. Das äußere Metallnetz 24 hat eine Maschenweite von 0,49 mm und eine Drahtstärke von 0,3 mm. Die Dicke des inneren Metallnetzes ist 0,15 mm und die des äußeren Metallnetzes 0,48 mm. Die Siebe werden durch ein Abstandselement 33, z.B. eine Schraubenfeder oder einen Fixierring, in Position gehalten. Weiterhin sind Abstandselemente 30 vorgesehen, um einen Kontakt der Airbaghülle (nicht gezeigt) mit dem Separator zu vermeiden.

Fig. 5 zeigt eine ähnliche Ausführungsform des Separators wie Fig. 4, wobei der Separator nur aus einem einzigen Metallnetz 23 mit einer Maschenweite von 0,130 mm besteht. Auch hier sind zum Schutz der Airbaghülle (nicht gezeigt) Abstandelemente 30 vorgesehen.

Anstelle der in den Fig. 4 und 5 gezeigten Separatoren kann ein Raumbereich, bei dem während des Aufblasens des Airbags ein sowohl vom Innenraum des Behälters als auch vom Airbagvolumen verschiedener Druck herrscht, auch so erzeugt werden, daß eine dicke Gehäusewand mit darin befindlichen Kanälen vorgesehen ist, durch die Verbrennungsgase in das Airbagvolumen strömen können. Diese Kanäle können gerade durch die Gehäusewand verlaufen, sie können jedoch auch gekrümmt sein. Wenn die Gase beim Aufblasen des Airbags durch diese Kanäle strömen, so herrscht darin ein vom Innenraum und vom Airbagvolumen verschiedener Druck.

In noch einer möglichen Ausführungsform der vorliegenden Erfindung kann ein Separatorelement vorgesehen sein, das direkt an der Außenseite eines z.B. zylindrischen Behälters anliegt. Bei dieser Ausführungsform werden jedoch hohe mechanische Anforderungen an die Festigkeit des Separatorelements gestellt, so daß ein Abstand von 2 bis 8 mm, vorzugsweise 3 bis 6 mm und besonders bevorzugt 3,5 bis 5 mm zwischen der äußeren Umfangswand des Behälters und dem Separator (ausgedrückt als lichte Weite) bevorzugt ist.

Das folgende Beispiel soll die Herstellung der erfindungsgemäß verwendeten pyrotechnischen Mischung erläutern.

BEISPIEL

Komponenten

a) Kaliumnitrat, Fluka Nr. 60415 oder Merck 5063
b) Natriumazid, Fluka Nr. 71290 oder Merck 6688
c) Nitrocellulose (Collodiumwolle N-Gehalt 12,2 %)
d) Silikonkautschuk RTVM 521 (Elastosil 4500) Wacker-Chemie

26,9 Gewichtsteile Kaliumnitrat und 52,2 Gewichtsteile Natriumazid werden einzeln in einer Rotormühle auf eine Korngröße < 80 μm zerkleinert. Die zerkleinerten Teilchen werden mit 1,6 Gewichtsteilen Nitrocellulose trocken bis zur Homogenität gemischt.

Anschließend wird die trockene Mischung mit Aceton angeteigt, so daß eine plastische Masse entsteht. Überschüssiges Lösungsmittel wird unter Rühren und Kneten so lange ausgetrieben, bis die Masse einen krümeligen Zustand erreicht. Dann wird die krümelige Masse durch ein 0,4 mm Sieb granuliert. Das Granulat wird getrocknet und anschließend kann der Feinanteil von < 200 μm abgesiebt, erneut angeteigt und nachgranuliert oder der nächsten Charge zugeschlagen werden.

Den auf diese Weise erhaltenen Vorgranulationsprodukten werden 19,0 Gewichsteile Silikonkautschuk, der zuvor mit 4 % Härter T37 (Wacker Chemie) vermischt wurde, zugesetzt und vorsichtig verrührt. Anschließend wird die Mischung geknetet, bis alle Partikel mit Silikonkautschuk benetzt sind. Dann wird die Mischung durch ein 1,6 mm Sieb granuliert und bei erhöhter Temperatur augehärtet.

Falls erforderlich, kann wiederum ein etwaiger Feinanteil ausgesiebt werden.

In einer weiteren Ausführungsform der vorliegenden Erfindung können Kaliumnitrat und Natriumazid auch ohne Zwischengranulation mit Nitrocellulose direkt mit dem Silikonkautschuk vermischt und anschließend granuliert werden.

**Patentansprüche**

1. Gasgenerator für Airbags, umfassend:

- einen Behälter (2) mit mehreren Ausströmöffnungen (20), in dem sich eine gaserzeugende Treibladung (3) befindet, die in Form von Granulatteilchen mit einer Korngröße von 500 μm bis 4 mm ist,

- mindestens ein Anzündelement (13, 14) zur Anzündung der Treibladung (3), und

- einen Raumbereich (29), der den Behälter (2) mindestens im Bereich der Öffnungen (20) umgibt und der (a) durch einen gasdurchlässigen Separator (23, 24, 25) vom Airbagvolumen (31) abgegrenzt ist, oder (b) auf eine solche Weise ausgestaltet ist, daß während des Aufblasens des Airbags durch die gezündete Treibladung (3) in diesem Raumbereich (29) ein höherer Druck als im Airbagvolumen (31) herrscht, oder (c) durch einen gasdurchlässigen Separator (23, 24, 25) abgegrenzt und auf eine solche Weise ausgestaltet ist, daß während des Aufblasens in ihm ein höherer Druck als im Airbagvolumen (31) herrscht.

2. Gasgenerator nach Anspruch 1,
**dadurch gekennzeichnet,**
daß er die Treibladung (3) in einer Menge von 0,05 - 0,7 g pro Liter Gasvolumen bei Umgebungsdruck enthält, das vom Gasgenerator während eines Aufblasens des Airbags durch die gezündete Treibladung erzeugt wird.

3. Gasgenerator nach Anspruch 1 oder 2,
**dadurch gekennzeichnet,**
daß während des Aufblasens des Airbags im Innenraum des Behälters (2) ein um mehr als den Faktor 2 höherer Druck als außerhalb des Behälters (2) herrscht.

4. Gasgenerator nach einem der Ansprüche 1 bis 3,
**dadurch gekennzeichnet,**
daß der Behälter (2) im wesentlichen zylinderförmig mit einer Vielzahl von umfangseitigen Öffnungen (20) ausgebildet ist.

5. Gasgenerator nach einem der Ansprüche 1 bis 4,
**dadurch gekennzeichnet,**
daß der Behälter (2) eine Umfangswand (32) mit einer Wandstärke von 0,5 - 10 mm aufweist und der Werkstoff des Behälters (2) aus Metall, insbesondere Aluminium oder korrosionsbeständigem Stahl, oder Keramikstahl, insbesondere Silikat, besteht.

6. Gasgenerator nach einem der Ansprüche 1 bis 5,
**dadurch gekennzeichnet,**
daß der Raumbereich (29) durch die Umfangswand (32) des Behälters (2) und durch einen Separator (23, 24, 25) begrenzt ist, wobei der Separator für feste, bei der Verbrennung der Treibladung entstehende und aus dem Behälter austretende Teilchen mit einem Durchmesser von mindestens 0,3 mm undurchlässig ist.

7. Gasgenerator nach einem der Ansprüche 1 bis 6,
**dadurch gekennzeichnet,**
daß der Abstand des Separators (23, 24, 25) von der Umfangswand (32) des Behälters (2) zumindest im Bereich der Öffnungen (20) derart ist, daß ein Ausströmen des bei der Verbrennung der Treibladung entstehenden Gases durch die Öffnungen (20) des Behälters mit Schallgeschwindigkeit gewährleistet ist.

8. Gasgenerator nach Anspruch 7,
**dadurch gekennzeichnet,**
daß der Abstand des Separators (23, 24, 25) von der Umfangswand (32) des Behälters (2) mindestens im Bereich der Öffnungen 3,5 bis 5 mm ist.

9. Gasgenerator nach einem der Ansprüche 6 bis 8,
**dadurch gekennzeichnet,**
daß der Separator mindestens ein inneres Separatorelement (23) und mindestens ein äußeres Separatorelement (24) umfaßt.

10. Gasgenerator nach Anspruch 9,
**dadurch gekennzeichnet,**
daß als Separatorelemente mindestens ein inneres Metallnetz (23) mit einer Maschenweite von 0,4 bis 1 mm und mindestens ein äußeres Metallnetz (24) mit einer Maschenweite von 0,1 bis 0,3 mm vorgesehen sind.

11. Gasgenerator nach Anspruch 10,
**dadurch gekennzeichnet,**
daß das innere Metallnetz (23) eine Drahtstärke von 0,05 - 0,5 mm und daß äußere Metallnetz (24) eine Drahtstärke von 0,05 - 0,3 mm aufweist.

12. Gasgenerator nach einem der Ansprüche 9 bis 11,
**dadurch gekennzeichnet,**
daß ein Filter (25) aus temperaturbeständigem Material zwischen dem inneren Separatorelement (23) und dem äußeren Separatorelement (24) vorgesehen ist.

13. Gasgenerator nach einem der Ansprüche 1 bis 12,
**dadurch gekennzeichnet,**
daß Abstandselemente (30) aus wärmedämmendem Werkstoff vorgesehen sind, die eine Airbaghülle (7) während des Aufblasens vor einem Kontakt mit dem Behälter (2) und/oder dem Separator (23, 24, 25) schützen.

14. Gasgenerator nach einem der Ansprüche 1 bis 13,
**dadurch gekennzeichnet,**
daß die pyrotechnische Mischung (3) im Behälter (2) in einer locker geschütteten Form vorliegt.

15. Gasgenerator nach einem der Ansprüche 1 bis 14,
**dadurch gekennzeichnet,**

daß die pyrotechnische Mischung (3) im Behälter (2) durch ein Abdichtungselement (10, 28), insbesondere eine Kunststoff- oder Metallfolie, vor einem Kontakt mit der Atmosphäre geschützt ist.

16. Airbaganordnung,
**dadurch gekennzeichnet**,
daß sie mindestens einen Gasgenerator nach einem der Ansprüche 1 bis 15 enthält.

**Claims**

1. Gas-generator for airbags comprising:

   - a container (2) having a plurality of discharge openings (20) in which there is located a gas-producing propellant charge (3) in the form of granulate particles having a grain size of 500 μm to 4 mm,
   - at least one ignition element (13, 14) for the ignition of the propellant charge (3) and
   - a space region (29) surrounding the container (2) at least in the region of the openings (20) and which

     a) is defined from the airbag volume (31) by a gas permeable separator (23, 24, 25) or
     b) is formed in such a way that during the inflation of the airbag by the ignited propellant charge (3) a higher pressure reigns in this space region (29) than in the airbag volume (31) or
     c) is defined by a gas permeable separator (23, 24, 25) and is formed in such a way that during the inflation a higher pressure reigns therein than in the airbag volume (31).

2. Gas-generator according to claim 1, characterized in that the propellant charge (3) is present in an amount of 0.05 to 0.7 g per liter of the gas volume which is prbduced by the gas generator during the inflation of the airbag by the ignited propellant charge under an ambient pressure.

3. Gas-generator according to claim 1 or 2, characterized in that during the inflation of the airbag, a pressure exists in the inner space of the container (2), which is higher by more than the factor 2 than the pressure which reigns outside the container (2).

4. Gas-generator according to one of claims 1 to 3, characterized in that the container (2) is essentially cylindrical and has a multiplicity of openings (20) formed in the circumference thereof.

5. Gas-generator according to one of the claims 1 to 4, characterized in that the container (2) comprises a surrounding wall (32) having a wall thickness of from 0.5 to 10 mm, and that the material of the container (2) consists of metal, particularly aluminum or stainless steel, or ceramic steel, particularly silicate.

6. Gas-generator according to one of the claims 1 to 5, characterized in that the space region (29) is defined by the surrounding wall (32) of the container (2) and by a separator (23, 24, 25), wherein said separator is impermeable to solid particles produced by the burning of the propellant charge and leaving the container and having a diameter of at least 0.3 mm.

7. Gas-generator according to one of the claims 1 to 6, characterized in that the distance of the separator (23, 24, 25) from the surrounding wall (32) of the container (2) at least in the region of the openings (20) is such that a discharge of the gas which is produced during the burning of the propellant charge through the openings (20) of the container is effected at sonic velocity.

8. Gas-generator according to claim 7, characterized in that the spacing of the separator (23, 24, 25) from the surrounding wall (32) of the container (2) is 3.5 to 5 mm in at least the region of the openings.

9. Gas-generator according to one of the claims 6 to 8, characterized in that the separator comprises at least an inner separator element (23) and an outer separator element (24).

10. Gas-generator according to claim 9, characterized in that as separator elements at least one inner metal mesh (23) having a mesh width of from 0.4 to 1 mm and at least one outer metal mesh (24) having a mesh width of 0.1 to 0.3 mm are provided.

11. Gas-generator according to claim 10, characterized in that the inner metal mesh (23) has a wire thickness of from 0.05 to 0.5 mm and the outer metal mesh (24) has a wire thickness of from 0.05 to 0.3 mm.

12. Gas-generator according to one of the claims 9 to 11, characterized in that there is arranged a filter (25) of heat resistant material between the inner separator element (23) and the outer separator element (24).

13. Gas-generator according to one of the claims 1 to 12, characterized in that there are provided spacer elements (30) of a heat-insulating material, which protect an airbag casing (7) from contact with the container (2) and/or the separator (23, 24, 25) during inflation.

14. Gas-generator according to one of the claims 1 to 13, characterized in that the pyrotechnic mixture (3) in the container (2) is present in a loosely poured form.

15. Gas-generator according to one of the claims 1 to 14, characterized in that the pyrotechnic mixture (3) in the container (2) is protected by a sealing element (10, 28), particularly a plastic or metal film, from contact with the atmosphere.

16. Airbag arrangement characterized in that it includes at least one gas-generator according to one of the claims 1 to 15.

**Revendications**

1. Générateur de gaz pour coussins gonflables, comprenant :

   - un réservoir (2) avec plusieurs orifices d'évacuation (20), dans lequel se trouve une charge propulsive (3) produisant du gaz qui se présente sous forme de granules présentant une granulométrie de 500 μm à 4 mm,
   - au moins un élément d'allumage (13, 14) pour amorcer la charge propulsive (3), et
   - une zone (29), qui entoure le réservoir (2) au moins dans la zone des orifices (20) et qui

     (a) est délimitée du volume du coussin gonflable (31) par un séparateur (23, 24, 25) perméable aux gaz, ou
     (b) est conçue de telle sorte que lorsque le coussin gonflable se gonfle suite à l'amorçage de la charge propulsive (3), il règne dans cette zone (29) une pression supérieure à celle du volume du coussin gonflable (31), ou
     (c) est délimitée par un séparateur (23, 24, 25) perméable aux gaz et est conçu de telle sorte que lorsque le coussin se gonfle, la pression régnant à l'intérieur est supérieure à la pression régnant dans le volume du coussin gonflable (31).

2. Générateur de gaz selon la revendication 1, caractérisé en ce qu'il contient la charge propulsive (3) en une quantité allant de 0,05 à 0,7 g par litre de volume de gaz à la pression ambiante, qui est produit par le générateur de gaz pendant le gonflement du coussin par la charge propulsive amorcée.

3. Générateur de gaz selon la revendication 1 ou 2, caractérisé en ce que pendant le gonflement du coussin d'air, la pression à l'intérieur du réservoir (2) est supérieure d'un facteur 2 à la pression régnant à l'extérieur du réservoir, (2).

4. Générateur de gaz selon l'une quelconque des revendications 1 à 3, caractérisé en ce que réservoir (2) se présente pour l'essentiel sous une forme cylindrique avec une pluralité d'orifices périphériques (20).

5. Générateur selon l'une quelconque des revendications 1 à 4, caractérisé en ce que le réservoir (2) présente une paroi périphérique (32) d'une épaisseur de 0,5 à 10 mm et le matériau du réservoir (2) est un métal, notamment l'aluminium ou l'acier résistant à la corrosion, ou l'acier céramique, en particulier un silicate.

6. Générateur de gaz selon l'une quelconque des revendications 1 à 5, caractérisé en ce que la zone (29) est délimitée par la paroi périphérique (32) du réservoir (2) et par un séparateur (23, 24, 25), le séparateur étant étanche vis-à-vis des particules solides naissant lors de la comoustion de la charge propulsive et présentant un diamètre d'au moins 0,3 mm.

7. Générateur de gaz selon l'une quelconque des revendications 1 à 6, caractérisé en ce que l'espacement entre le séparateur (23, 24, 25) et la paroi périphérique (32) du réservoir (2) se présente, au moins dans la zone des orifices (20), de telle sorte qu'une évacuation du gaz se produisant lors de la comoustion de la charge propulsive est réalisée par les orifices (20) du réservoir à la vitesse du son.

8. Générateur de gaz selon la revendication 7, caractérisé en ce que l'espacement entre le séparateur (23, 24, 25) et la paroi périphérique (32) du réservoir (2) est de 3,5 à 5 mm au moins dans la zone des orifices.

9. Générateur de gaz selon l'une quelconque des revendications 6 à 8, caractérisé en ce que le séparateur comprend au moins un élément de séparateur interne (23) et au moins un élément de séparateur externe (24).

10. Générateur de gaz selon la revendication 9, caractérisé en ce que comme éléments de séparateur, sont prévus au moins un réseau métallique interne (23) présentant un maillage de 0,4 à 1 mm et au moins un réseau métallique externe (24) présentant un maillage de 0,1 à 0,3 mm.

11. Générateur de gaz selon la revendication 10, caractérisé en ce que le réseau métallique interne (23) présente une épaisseur de fil de 0,05 à 0,5 mm et le réseau métallique externe (24) présente une épaisseur de fil de 0,05 à 0,3 mm.

12. Générateur de gaz selon l'une quelconque des revendications 9 à 11, caractérisé en ce qu'un filtre réalisé en un matériau thermorésistant est prévu entre l'élément de séparateur interne (23) et l'élément de séparateur externe (24).

13. Générateur de gaz selon l'une des revendications 1 à 12, caractérisé en ce que des éléments d'espacement (30) réalisés dans un matériau calorifuge sont prévus, ces éléments empêchant une gaine de coussin d'air (7), lors du gonflement, d'entrer en contact avec le réservoir (2) et/ou le séparateur (23, 24, 25).

14. Générateur de gaz selon l'une des revendications 1 à 13, caractérisé en ce que le mélange pyrotechnique (3) est présent dans le réservoir (2) sous forme peu compacte.

15. Générateur de gaz selon des revendications 1 à 14, caractérisé en ce que le mélange pyrotechnique (3) présent dans le réservoir (2) est protégé contre un contact avec l'atmosphère par un élément d'étanchéification (10, 28), en particulier une pellicule métallique ou de matière plastique.

16. Agencement de coussin d'air, caractérisé en ce qu'il contient au moins un générateur de gaz selon l'une quelconque des revendications 1 à 15.

FIG.1

FIG. 2

FIG.3

FIG.5

FIG.4